# FASCICULE DE BREVET EUROPEEN

(11) **EP 1 585 037 B1**
(45) Date de publication et mention de la délivrance du brevet: **13.06.2018**
(21) Numéro de dépôt: 05290729.2
(22) Date de dépôt: 04.04.2005
(51) Int. Cl.: G06F 17/30

(54) **PROCÉDÉ DE RECONNAISSANCE ET DE RÉFÉRENCEMENT POUR ACCÈS AUX OBJETS DYNAMIQUES DANS LES PAGES DE NAVIGATION INTERNET**
VERFAHREN ZUR ERKENNUNG UND REFERENZIERUNG DES ZUGRIFFS AUF DYNAMISCHE OBJEKTE IN INTERNET-SEITEN
DETECTION AND REFERENCING METHOD FOR THE ACCESS TO DYNAMIC OBJECTS ON INTERNET PAGES

(30) Priorité: 05.04.2004 FR 0403539
(43) Date de publication de la demande: 12.10.2005
(73) Titulaire: Bull SAS, 78340 Les Clayes-sous-Bois (FR)
(72) Inventeur: Roser, Geneviève, 91700 Villiers sur Orge (FR)
(74) Mandataire: Bonnet, Michel

(56) Documents cités:
- US-A1- 2002 073 119
- VITALI F ET AL: "Extending HTML in a principled way with displets" COMPUTER NETWORKS AND ISDN SYSTEMS, NORTH HOLLAND PUBLISHING. AMSTERDAM, NL, vol. 29, no. 8-13, 1 septembre 1997 (1997-09-01), pages 1115-1128, XP004095309 ISSN: 0169-7552

## Description

La présente invention concerne le domaine de la navigation Internet et en particulier l'utilisation récente des objets dynamiques au sein des pages de navigation.

Les sites Internet sont constitués de pages Internet écrites dans des langages adaptés aux formats de publication Internet, tels que le « HTML » (pour l'anglais Hypertext Markup Language) ou « XML » (pour l'anglais Extensible Markup Language). Ces langages simples permettent aux développeurs de sites Internet de définir des pages contenant des zones de texte et d'image auxquels ils peuvent attribuer des propriétés (Markup). Les différentes pages ou zones d'une page sont reliées entre elles grâce à une organisation complexe réalisée à l'aide de liens (Hypertext). Ces pages Internet sont consultées par les utilisateurs, grâce à des applications logicielles, appelées « navigateurs » (« browser » en anglais), qui permettent l'affichage, sur l'ordinateur des utilisateurs, de ces pages telles qu'elles ont été conçues. Récemment, un nouveau langage a été créé pour permettre plus de fonctionnalités au sein des pages affichées par les navigateurs. Ce langage, appelé « DHTML » (pour l'anglais Dynamic Hypertext Markup Language), permet d'intégrer dans les pages Internet des éléments dynamiques, repérés par des balises au sein des pages et définis par des identifiants. Après téléchargement d'une page Internet depuis un serveur et affichage sur l'écran de l'ordinateur de l'utilisateur qui la consulte, ces éléments dynamiques permettent que l'affichage évolue au cours du temps et/ou selon les actions de l'utilisateur, sans nécessiter de communication avec aucun serveur. Cette particularité est rendue possible par le fait que ces éléments dynamiques sont caractérisés par leur balise, qui révèle leur nature. Le navigateur localise les éléments dynamiques grâce à leur balise et référence les objets correspondant grâce à leur identifiant qui offre un moyen d'accès à ces objets identifiés. L'identifiant correspond à une référence d'accès aux objets permettant leur instanciation par le navigateur, c'est-à-dire leur création et leur initialisation selon des paramètres déterminés par le concepteur. Cette référence d'accès aux objets ainsi initialisés permet l'exécution de leurs fonctions spécifiques, dites méthodes, et la modification de leurs propriétés. Lorsqu'ils sont inclus dans une page Internet, des scripts exécutés au sein de l'environnement logiciel fourni par les navigateurs Internet permettent d'y accéder rapidement grâce à cette référence d'accès. Ces scripts interprétés par les navigateurs permettent l'exécution de méthodes de ces objets et la modification dynamique de leur affichage au sein de la page.

Il est connu dans l'art antérieur des navigateurs permettant l'affichage d'éléments dynamiques et l'exécution des méthodes des objets dynamiques auxquels ils réfèrent, mais seulement pour certains types d'objets donnés, définis par les concepteurs des navigateurs. Un problème important dans ce domaine est que les différents concepteurs de navigateurs n'ont pas encore la même vision des implémentations que doit subir le langage DHTML. Il en résulte que les différents navigateurs ne supportent pas les mêmes fonctionnalités. La création d'une norme commune est en cours mais les concepteurs ne s'accordent pas sur les objets à implémenter ni sur la façon de les implémenter dans leurs navigateurs. Certains navigateurs permettent l'accès aux objets dynamiques dès lors qu'ils sont présents dans la page, car le navigateur les identifie automatiquement et interprète les fonctions définies par ces objets. Certains navigateurs sont capables également d'interpréter le langage des scripts d'exécution de méthodes des objets, mais ils ne sont pas capables d'identifier les éléments au sein des pages Internet ni donc de référencer les objets correspondants.

Il est connu dans l'art antérieur des sites Internet dans lesquels l'utilisation d'éléments dynamiques a été abandonnée pour permettre aux utilisateurs d'accéder aux mêmes pages quel que soit leur navigateur. Cette solution présente l'inconvénient que les sites ainsi conçus n'ont pas un aspect aussi élégant et pratique d'utilisation que ceux obtenus avec la technologie actuelle.

Il est également connu dans l'art antérieur des sites Internet dans lesquels les pages sont écrites selon plusieurs versions différentes de code de programmation, pour permettre l'accès aux différents objets dynamiques au sein des pages, quel que soit le navigateur de la personne consultant le site Internet. Selon le type de navigateur requérant le chargement d'une page, le serveur enverra le type de page adapté. Cette solution pose un problème de coût de mise en oeuvre et de perte de temps pour les concepteurs de site Internet qui doivent écrire toutes les pages dans plusieurs versions de code de programmation.

Il est proposé dans le document Vitali F et al: "Extending HTML in a principled way with displets", Computer Networks and ISDN Systems 29 (1997) 1115-1128 des extensions du langage HTML, sous la forme de modules Java intégrés dans des documents HTML. Les displets sont des modules logiciels permettant la spécification du rendu des balises HTML existantes ou nouvelles. Ce concept de modules ou *displets* est prévu pour permettre à des extensions arbitraires d'être définies dans des documents HTML sans retomber dans la complexité de SGML ou XML.

Dans l'art antérieur, des procédés permettant l'utilisation des objets dynamiques quel que soit le navigateur sont ainsi connus, mais nécessitent l'inclusion, dans chacune des pages contenant des éléments dynamiques, de lignes de codes spécifiques à chaque élément dynamique de la page. Ces lignes de code définissent une variable initialisée de façon à contenir une référence à l'élément dynamique concerné. L'accès à cette référence lors du chargement de la page permet que tous les types de navigateur puissent identifier et utiliser l'objet dynamique correspondant. Cette solution alourdit également le développement des sites Internet car elle nécessite l'inclusion de lignes de code spécifiques à chaque élément dynamique contenu dans chacune des pages du site Internet, pour l'utilisation d'objets dynamiques qui sont normalement conçus pour éviter ce type de définition systématique.

Dans ce contexte, il est intéressant de proposer un procédé permettant de rendre accessible des objets dynamiques connus, grâce à la création dynamique de références d'accès à ces objets, quel que soit le navigateur utilisé pour afficher la page Internet contenant les éléments dynamiques qui requièrent l'utilisation de ces objets dynamiques.

La présente invention a pour but de pallier certains inconvénients de l'art antérieur en proposant un procédé de reconnaissance et de référencement pour accès aux objets dynamiques dans les pages de navigation Internet, permettant, si le navigateur utilisé pour consulter les pages Internet le nécessite, de parcourir les pages Internet pour répertorier les éléments dynamiques qu'ils contiennent et permettre de créer une référence d'accès permettant l'utilisation des objets dynamiques auxquels ils réfèrent.

Ce but est atteint par un procédé de reconnaissance et de référencement d'objets dynamiques dans des pages Internet rendues disponibles sur le réseau Internet grâce à au moins un ordinateur, dit serveur de page, pour consultation par au moins un outil logiciel de navigation Internet, dit navigateur, exécuté sur les moyens de traitement d'au moins un ordinateur d'utilisateur, caractérisé en ce qu'il consiste en un script, d'une part, stocké dans des moyens de mémorisation d'au moins un ordinateur, dit serveur de script, et, d'autre part, inclus dans les pages Internet contenant des éléments dynamiques, pour être interprété par tous les types de navigateurs, lors du chargement de ces pages par l'ordinateur de l'utilisateur et mettre en oeuvre, pour chacune des pages Internet consultées par le navigateur de l'utilisateur, une étape de test du type de navigateur utilisé pour consulter la page Internet, afin de déterminer si ce navigateur nécessite ou non la mise en oeuvre des étapes suivantes définies dans le script :
- parcours automatisé de la page Internet reçue par l'ordinateur de l'utilisateur et identification des éléments dynamiques qu'elle contient, d'après les balises d'une pluralité d'éléments dynamiques connus, stockés dans des moyens de mémorisation de l'ordinateur de l'utilisateur ;
- création d'une référence d'accès aux objets dynamiques correspondants aux éléments dynamiques identifiés, grâce à l'interprétation par le navigateur de l'utilisateur d'un code source du langage de programmation des objets dynamiques, ce code source étant stocké dans les moyens de mémorisation de l'ordinateur de l'utilisateur ;
- traitement, par le navigateur de l'utilisateur, de la page Internet et instanciation des objets dynamiques définis ;
- affichage, par le navigateur de l'utilisateur, de la page Internet avec les objets dynamiques qu'elle contient, grâce à des moyens d'affichage et des moyens de traitement de l'ordinateur de l'utilisateur.

Selon une autre particularité, l'invention est telle qu'énoncé dans les revendications 2 à 5.

Selon une autre particularité, l'ordinateur serveur de pages est également l'ordinateur serveur de script et stocke, dans ses moyens de mémorisation, d'une part, le fichier correspondant au script permettant la reconnaissance et le référencement des objets dynamiques dans les pages Internet et, d'autre part, les fichiers correspondant aux pages Internet dans lesquelles ce script doit être inclus, l'étape d'inclusion du script consistant en l'ajout, grâce aux moyens de traitement de cet ordinateur serveur de pages et de script, d'une URL indiquant le chemin d'accès d'un fichier correspondant à ce script dans ses propres moyens de mémorisation.

Selon une autre particularité, l'ordinateur serveur de pages est un autre ordinateur que l'ordinateur serveur de script et l'inclusion du script dans les pages Internet, lors d'une demande de consultation, par le navigateur d'un utilisateur, d'une page Internet contenant des éléments dynamiques, est réalisée selon les étapes suivantes :
- envoi, par l'ordinateur serveur de pages, vers l'ordinateur serveur de script, via le réseau Internet, d'une requête d'accès au fichier correspondant au script dans les moyens de mémorisation de l'ordinateur serveur de script ;
- autorisation de l'accès au fichier correspondant au script, grâce à des moyens d'autorisation d'accès de l'ordinateur serveur de script, puis envoi de ce fichier, par l'ordinateur serveur de script, vers l'ordinateur serveur de pages, via le réseau Internet ;
- réception du fichier par l'ordinateur serveur de pages, inclusion du script dans la page Internet demandée pour consultation par le navigateur de l'utilisateur et envoi de la page Internet complétée du script vers l'ordinateur de l'utilisateur, via le réseau Internet.

Selon une autre particularité, l'ordinateur serveur de pages est un autre ordinateur que l'ordinateur serveur de script et l'inclusion du script dans les pages Internet, lors d'une demande de consultation, par le navigateur d'un utilisateur, d'une page Internet contenant des éléments dynamiques, est réalisée selon les étapes suivantes :
- envoi, par l'ordinateur serveur de pages, vers l'ordinateur serveur de script, via le réseau Internet, de la page Internet dans laquelle le script doit être inclus ;
- réception par l'ordinateur serveur de script de la page envoyée par l'ordinateur serveur de pages et inclusion du script dans la page Internet, grâce à des moyens de traitement de l'ordinateur serveur de script, puis envoi de la page Internet complétée du script vers l'ordinateur serveur de pages, via le réseau Internet ;
- envoi, par l'ordinateur serveur de pages, de la page Internet complétée du script vers l'ordinateur de l'utilisateur, via le réseau Internet.

Un autre but de l'invention est de proposer un système de reconnaissance et de référencement d'objets dynamiques dans des pages Internet permettant à des navigateurs d'utilisateurs de reconnaître et de référencer les objets dynamiques correspondant à des éléments dynamiques présents dans des pages Internet, même lorsque le navigateur de l'utilisateur ne gère pas le référencement direct des objets dynamiques grâce à leur identifiant.

Ce but est atteint par un système de reconnaissance et de référencement d'objets dynamiques dans des pages Internet reçues par un navigateur exécuté par un ordinateur d'utilisateur, même lorsque le navigateur de l'utilisateur ne gère pas l'accès automatique aux objets dynamiques, ce système comportant au moins un ordinateur serveur de script, au moins un ordinateur serveur de pages et au moins un ordinateur d'un utilisateur, ces ordinateurs comportant tous des moyens de mémorisation, des moyens de traitement et des moyens de communication par le réseau Internet, caractérisé en ce que l'ordinateur serveur de pages et l'ordinateur serveur de script comportent également des moyens d'autorisation d'accès au contenu de leurs moyens de mémorisation, les moyens de mémorisation permettant, d'une part, à l'ordinateur serveur de pages de stocker des fichiers correspondant à des pages Internet parmi lesquelles certaines contiennent des éléments dynamiques et permettant, d'autre part, à l'ordinateur serveur de script de stocker un script à inclure dans des pages Internet pour la reconnaissance et le référencement des objets dynamiques qu'elles contiennent, les moyens d'autorisation d'accès permettant, d'une part, à l'ordinateur serveur de pages de rendre les pages Internet, stockées dans ses moyens de mémorisation, disponibles sur le réseau Internet pour consultation par des navigateurs exécutés sur les moyens de traitement d'ordinateurs d'utilisateurs et permettant, d'autre part, à l'ordinateur serveur de script de rendre disponible le script, stocké dans ses moyens de mémorisation, pour inclusion dans des pages Internet contenant des éléments dynamiques, avant l'envoi de ces pages vers les navigateurs des utilisateurs.

Selon une autre particularité, les moyens de mémorisation de l'ordinateur de l'utilisateur stockent le code source du langage de programmation des objets dynamiques et stockent temporairement les pages Internet reçues, via le réseau Internet, depuis l'ordinateur serveur de pages et ses moyens de traitement permettent d'exécuter le navigateur permettant de consulter les pages Internet et d'interpréter le script inclus dans certaines de ces pages, grâce à l'utilisation, par le navigateur, du code source du langage de programmation des objets dynamiques.

Selon une autre particularité, l'ordinateur serveur de pages est également l'ordinateur serveur de script et ses moyens de mémorisation stockent, d'une part, le fichier correspondant au script qui permet la reconnaissance et le référencement des objets dynamiques dans les pages Internet pour permettre l'accès à ces objets par tous les types de navigateurs et, d'autre part, les fichiers correspondant aux pages Internet dans lesquelles ce script doit être inclus, ses moyens d'autorisation d'accès au contenu de ses moyens de mémorisation permettant, d'une part, de rendre disponibles sur le réseau Internet les pages Internet correspondant aux fichiers stockés dans ses moyens de mémorisation et, d'autre part, de rendre disponible le script stocké dans ses moyens de mémorisation pour l'inclure dans les pages Internet, grâce à ses moyens de traitement, en ajoutant une URL indiquant le chemin d'accès au fichier correspondant à ce script dans ses moyens de mémorisation.

Selon une autre particularité, l'ordinateur serveur de pages est un autre ordinateur que l'ordinateur serveur de script et l'inclusion du script dans les pages Internet contenant des éléments dynamiques nécessite, d'une part, une communication entre ces ordinateurs, grâce à leurs moyens de communication par Internet et, d'autre part, l'ajout, dans certaines pages Internet, de l'URL indiquant le chemin d'accès au fichier correspondant à ce script dans les moyens de mémorisation de l'ordinateur serveur de script, grâce aux moyens de traitement de l'ordinateur serveur de pages ou de l'ordinateur serveur de script.

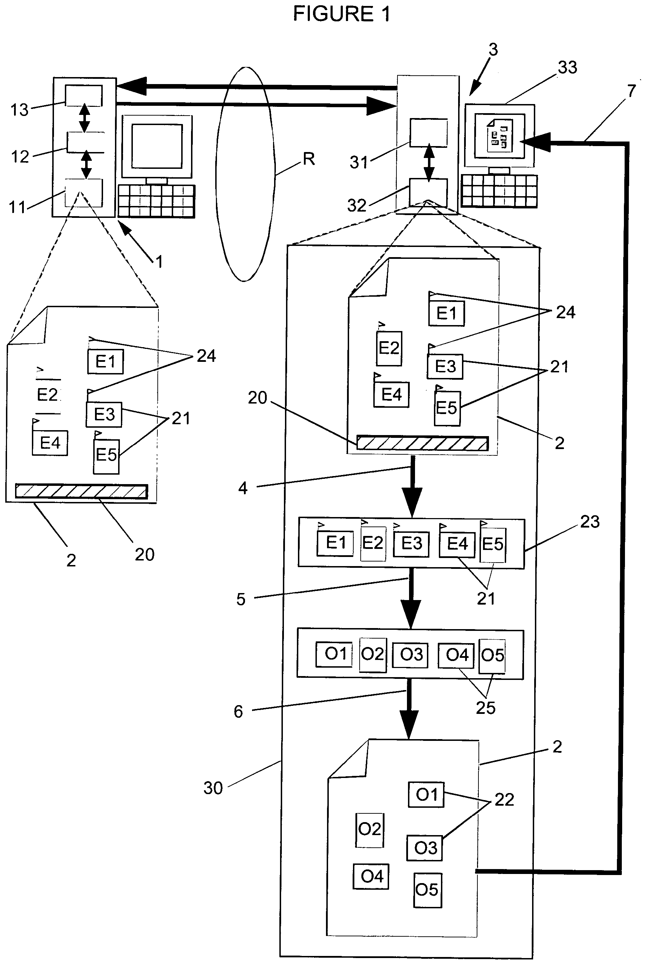

D'autres particularités et avantages de la présente invention apparaîtront plus clairement à la lecture de la description ci-après, faite en référence à la figure 1, qui représente un schéma du procédé selon l'invention, tel qu'il est mis en oeuvre par le système constitué, selon un mode de réalisation de l'invention, d'un ordinateur serveur de pages, également serveur de script, et d'un ordinateur d'un utilisateur.

La présente invention concerne un procédé de reconnaissance et de référencement pour l'accès aux objets (22) dynamiques correspondant à des éléments (21) dynamiques contenus dans des pages (2) Internet, grâce à la présence dans ces pages (2) d'un script (20), interprétable et exécutable par les différents types de navigateurs (30) connus, pour mettre en oeuvre différentes étapes du procédé. La présente invention concerne également un système permettant la mise en oeuvre des étapes du procédé selon l'invention. Tous les types de navigateurs (30) actuels ne reconnaissent pas automatiquement les éléments (21) dynamiques présents dans les pages (2) Internet conçues selon les langages de programmation récents. Les objets (22) dynamiques auxquels ces éléments (21) réfèrent ne sont donc pas directement accessibles et manipulables en programmation objet par tous les types de navigateurs (30). Cette limitation de certains navigateurs (30) oblige souvent les concepteurs de site Internet à concevoir plusieurs versions des mêmes pages Internet pour permettre l'envoi d'une des versions vers les utilisateurs, en fonction du type de navigateur (30) exécuté par leur ordinateur (3). D'autres concepteurs choisissent de définir une variable pour chaque élément (21) dynamique présent dans la page, de façon à définir une référence qui permettra l'utilisation de l'objet (22) dynamique correspondant lors du chargement de la page par les différents types de navigateurs. Ces deux solutions constituent une perte de temps pour les concepteurs de site Internet qui préfèrent généralement utiliser les outils de programmation les plus récents pour concevoir des pages élégantes et pratiques d'utilisation, grâce aux fonctionnalités permises par les technologies récentes.

La présente invention permet aux concepteurs d'effectivement concevoir leur site Internet avec les outils les plus récents, sans se préoccuper des limitations des navigateurs (30) des utilisateurs. Les concepteurs pourront, par exemple, simplement inclure le script (20) permettant la mise en oeuvre de certaines étapes du procédé selon l'invention dans leurs pages (2) Internet contenant des éléments (21) dynamiques, ce qui présente un gain de temps considérable.

Dans d'autres variantes de réalisation, le script (20) n'est pas mis à disposition directement des concepteurs de site Internet mais le procédé nécessite l'envoi, par l'ordinateur serveur de pages, d'une requête d'accès au script (20) vers un ordinateur serveur de script possédant des moyens de mémorisation dans lesquels le script (20) est stocké. En fonction de la provenance de la requête d'accès au script, l'ordinateur (1) serveur de script pourra autoriser ou non l'accès au script (20) dans ses moyens de mémorisation, grâce à des moyens (12) d'autorisation d'accès, ou l'envoi du script vers l'ordinateur requérant, grâce à des moyens de communication Internet de l'ordinateur serveur de script. Une autre possibilité consiste en l'envoi, par l'ordinateur serveur de pages, vers l'ordinateur serveur de script, des pages (2) Internet dans lesquels le script (20) doit être inséré, pour que l'ordinateur (1) serveur de script réalise lui-même l'insertion grâce à ses moyens (13) de traitement et renvoie les pages Internet ainsi complétée du script vers l'ordinateur serveur de pages. L'ordinateur serveur de pages pourra alors envoyer les pages ainsi complétées vers les navigateurs (30) des utilisateurs requérant la consultation des pages Internet nécessitant l'insertion du script.

Le système permettant la mise en oeuvre des étapes du procédé selon l'invention consiste donc en au moins un ordinateur serveur de pages, au moins un ordinateur serveur de script et au moins un ordinateur d'un utilisateur. Dans une variante de réalisation représentée sur la figure 1, l'ordinateur serveur de pages est également l'ordinateur (1) serveur de script et le script (20) est inclus dans les pages (2) Internet par les moyens (13) de traitement de cet ordinateur. Ces ordinateurs possèdent tous des moyens de mémorisation, des moyens de traitement et des moyens de communication par Internet. Ces différents moyens des ordinateurs pourront être contraints à fonctionner selon le mode de réalisation choisit.

Pour plus de clarté, seule la variante de réalisation du procédé dans laquelle le script (20) est directement inséré, par l'ordinateur serveur de pages, dans les pages (2) Internet contenant des éléments (21) dynamiques sera expliqué ci-après. On considérera ici que les concepteurs ont accès au script (20) et l'insèrent dans toutes les pages (2) contenant des éléments (21) dynamiques nécessitant le script (20) pour le référencement des objets (22) dynamiques quel que soit les navigateurs (30) des utilisateurs consultant ces pages (2). Le script (20) peut être stocké dans des moyens (11) de mémorisation d'un ordinateur (1) serveur de page et rendu accessible sur le réseau Internet (R) grâce à la définition d'un lien hypertexte, par exemple, de type « URL » (pour l'anglais « Universal Resource Locator »), dans chacune des pages (2) nécessitant son insertion. Ce script (20) peut donc être stocké dans n'importe quel moyen de mémorisation, du moment qu'il est accessible aux ordinateurs (1) qui stockent les pages (2) Internet contenant des éléments (21) dynamiques nécessitant l'exécution du script (20) par certains navigateurs (30). Les pages (2) Internet et le script (20) sont rendus accessibles sur le réseau Internet (R), par l'ordinateur (1) serveur de pages, grâce à ses moyens (12) d'autorisation d'accès à ses moyens (11) de mémorisation et les demandes de consultation de pages Internet par les navigateurs (30) des utilisateurs sont traitées grâce à ses moyens (13) de traitement.

Les différents types de navigateurs (30) exécutés grâce à des moyens (32) de traitement des ordinateurs (3) des utilisateurs sont généralement conçus pour permettre l'interprétation des objets (22) dynamiques, grâce à la présence, dans les moyens (31) de mémorisation où sont stockées les informations relatives au navigateur (30) dans l'ordinateur (3) des utilisateurs, du code source de programmation des langages définissant ces objets. Un exemple de langage récent permettant l'exécution d'objets (22) dynamiques est le langage Jscript™ développé par Microsoft®. Cependant, tous les navigateurs (30) ne possèdent pas toutes les fonctionnalités permettant d'identifier les éléments (21) dynamiques issus de ce type de langage, au sein des pages (2) traitées par les navigateurs (30). Les objets (22) dynamiques auxquels ils réfèrent, bien que définis dans ce code source, ne seront donc pas accessibles automatiquement dans tous les types de navigateurs (30). Certains navigateurs, comme par exemple Internet Explorer de Microsoft®, lorsqu'ils traitent les pages Internet en vue de leur affichage grâce aux moyens (33) d'affichage des ordinateurs (3) des utilisateurs, reconnaissent automatiquement les éléments (21) dynamiques et réalisent l'instanciation des objets (22) dynamiques correspondants. L'instanciation des objets définis dans la page Internet résulte en la création d'un exemplaire de l'objet défini et en l'initialisation des variables de cet objet. En général, le concepteur de la page Internet déclare un objet grâce au langage de programmation et définit certaines variables pour son initialisation. Ensuite, le concepteur ajoute des lignes de code (dans ce même langage de programmation) afin de définir les fonctions dynamiques d'affichage qui seront exécutées sur l'objet lors d'actions de l'utilisateur ou au cours du temps. Dans ces navigateurs, la déclaration de l'objet dans la page Internet, avec un identifiant et une balise suffit à le rendre directement accessible par le navigateur. Ces navigateurs possèdent un code de programmation élaboré permettant, en temps réel, l'identification des éléments (21) et l'interprétation des objets (22) dynamiques présents au sein des pages Internet traitées. D'autres navigateurs, comme par exemple Netscape® ou Mozilla™, traitent tous les éléments statiques des pages Internet et sont capables d'effectuer des traitements dynamiques. Cependant, ces navigateurs ne sont pas capables d'accéder directement à un objet déclaré dans le code de la page Internet en cours de traitement. Ces objets ne sont donc pas directement accessibles grâce à leur identifiant et leur balise comme ils le sont avec Internet Explorer de Microsoft®, mais nécessitent un mécanisme d'accès aux objets présents dans la page, par création d'une référence d'accès aux objets permettant au navigateur d'accéder aux objets référencés. Ces navigateurs nécessitent donc la mise en oeuvre du procédé selon l'invention, par exemple, tel qu'il est décrit ci-après. Le procédé selon l'invention tient compte des différences connues entre ces navigateurs et sa mise en oeuvre dépend du type de navigateur (30) utilisé pour consulter les pages (2) Internet contenant des éléments (21) dynamiques.

Une première étape du procédé consiste en l'insertion dans les pages Internet contenant des éléments (21) dynamiques, d'un script (20) de reconnaissance et de référencement des objets (22) dynamiques correspondant à ces éléments. Cette première étape pourra être réalisée selon les différentes variantes de réalisation énoncées ci-dessus.

Une deuxième étape consiste en l'interprétation de ce script (20) par le navigateur (30) de l'utilisateur consultant la page (2) contenant ce script (20) et les éléments (21) dynamiques qui le nécessitent. L'interprétation des lignes de programmation contenues dans ce script (20) se fera grâce au fait que les navigateurs (30) connus possèdent déjà les codes sources nécessaires pour interpréter les différentes fonctionnalités fournies par les langages de programmation Internet récents. Le script (20) étant écrit dans un de ces langages, il sera automatiquement interprété par le navigateur (30), grâce aux moyens (32) de traitement de l'ordinateur (3) de l'utilisateur. L'exécution du script (20) par le navigateur (30) résulte en la mise en oeuvre des étapes suivantes du procédé.

L'étape suivante du procédé consiste en un test du type de navigateur (30) utilisé pour consulter la page (2) Internet dans laquelle le script (20) est inclus. Selon, le type de navigateur, la mise en oeuvre des étapes suivantes du procédé n'est pas forcément nécessaire, comme expliqué ci-dessus. Cette étape conditionne l'exécution des étapes suivantes par le navigateur (30) de l'utilisateur.

L'étape suivante du procédé consiste en un parcours (4) automatisé de la page Internet dans laquelle le script est inclus. Ce parcours (4) permet de trouver les éléments (21) dynamiques présents dans la page, grâce à leurs balises (24) révélant leurs natures et de les identifier grâce à leurs identifiants (E1, E2, E3, E4 et E5). Cette identification consiste à rechercher tous les types de balises connues, définies dans le code source du langage de programmation des éléments dynamiques, stocké dans les moyens (31) de mémorisation de l'ordinateur (3) de l'utilisateur, et vérifier la présence de telles balises (24) dans la page (2) Internet en cours de traitement. Par exemple, ces balises (24) peuvent concerner des objets (22) tels que des images, des tableaux, des boutons, etc. Chaque type de balise connu est passé en revue et tous les éléments (21) dynamiques rencontrés au cours de ce parcours de la page sont collectionnés dans une variable (23) globale d'énumération des éléments. Pour chaque type de balise (24), les identifiants des éléments (21) dynamiques trouvés servent à donner un nom à la référence (25) d'accès qui sera créée pour permettre l'accès à chaque objet (22) correspondant à chacun de ces éléments (21) dynamiques. A la fin de ce parcours (4), la variable (23) globale d'énumération contiendra tous les éléments (21) dynamiques identifiés grâce à leur identifiant (E1, E2, E3, E4 et E5). Cette variable contient alors des informations qui permettent de créer des références (25) d'accès pointant vers les objets dynamiques correspondant à ces éléments identifiés.

L'étape suivante consiste en un traitement (5) la variable (23) globale d'énumération des éléments (21) dynamiques de la page (2) Internet, en exécutant une méthode spécifique du langage de programmation des pages Internet dynamiques. Cette méthode, par exemple, la méthode « eval » des langages de programmation d'objets dynamiques, lorsqu'elle est réalisée sur la variable (23) globale d'énumération des éléments dynamiques, permet la création (5) de références (25) d'accès aux objets (22) dynamiques correspondant aux éléments (21) dynamiques identifiés. Chaque référence (25) d'accès porte le nom de l'identifiant de chaque élément (21) identifié et sera reconnue comme une référence à un objet (22) défini dans le code source du langage de programmation des objets dynamiques.

L'étape suivante du procédé consiste en un traitement (6) de la page (2) Internet complétée grâce à la création (5) des références (25) d'accès aux objets (22) dynamiques. Au cours de ce traitement (6), le navigateur (30) interprète les informations contenues dans la page (2) et réalise l'instanciation des objets (22) dynamiques qu'elle contient. Cette instanciation des objets (22) dynamiques est réalisée en utilisant le code source du langage de programmation des objets (22) dynamiques et consiste en la création d'un exemplaire de chaque objet (22) référencé et en son initialisation. Ce langage de programmation permet les différentes fonctions dynamiques de modification de l'affichage des pages (2) Internet, sans nécessiter de communication avec des ordinateurs (1) serveurs de pages à travers le réseau Internet (R).

La dernière étape du procédé consiste en l'affichage (7) de la page Internet avec ses objets (22) dynamiques, grâce à des moyens (33) d'affichage et des moyens de traitement des ordinateurs (3) des utilisateurs. Les objets (22) dynamiques seront ainsi affichés à l'emplacement prévu et évolueront, selon leur nature, au cours du temps et/ou en fonction d'actions de l'utilisateur. Grâce à l'ajout des références (25) d'accès, les scripts inclus dans la page pourront interagir avec les objets dynamiques en utilisant une programmation objet. Sans ces références (25) d'accès et l'instanciation des objets (22) correspondant, cette interaction n'aurait pas été possible avec des navigateurs tels que Netscape® ou Mozilla™.

On comprend ainsi que l'on a réalisé un procédé de reconnaissance et de référencement d'objets (22) dynamiques dans des pages (2) Internet, permettant l'identification (4) des éléments (21) dynamiques présents dans des pages (2) Internet, puis la définition des objets (22) dynamiques par création (5) de références (25) d'accès à ces objets, permettant leur instanciation lors du traitement (6) de la page Internet par les navigateurs (30) des utilisateurs, quel que soit leur type.

En fonctionnement, le concepteur des sites Internet insère simplement un script (20), permettant la mise en oeuvre de certaines étapes du procédé, dans les pages (2) Internet qu'il élabore ou y insère un lien indiquant le chemin d'accès au fichier correspondant à ce script (20). Un utilisateur d'un navigateur (30), lorsqu'il navigue sur le réseau Internet (R), demande la consultation d'une page (2) Internet contenant des éléments (21) dynamiques et le script (20) inséré. Lors du traitement de la page (2), le navigateur (30), quel que soit son type, va automatiquement, grâce à l'exécution du script, identifier (4) les éléments (21) dynamiques présents dans la page et définir (5) les références (25) vers les objets (22) dynamiques correspondants. Les objets (22) seront ainsi automatiquement rendus accessibles au navigateur (30) pour permettre la modification dynamique de l'affichage (7) de la page (2) Internet en cours de consultation, sans nécessiter de communication avec aucun serveur de pages.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de reconnaissance et de référencement d'objets (22) dynamiques dans des pages (2) Internet rendues disponibles sur le réseau (R) Internet grâce à au moins un ordinateur, dit serveur de page, pour consultation par au moins un outil logiciel de navigation Internet, dit navigateur (30), exécuté sur les moyens (32) de traitement d'au moins un ordinateur (3) d'utilisateur, **caractérisé en ce qu'**il consiste en un script (20), d'une part, stocké dans des moyens (11) de mémorisation d'au moins un ordinateur (1), dit serveur de script, et, d'autre part, inclus dans les pages (2) Internet contenant des éléments (21) dynamiques, pour être interprété par tous les types de navigateurs (30), lors du chargement de ces pages (2) par l'ordinateur (3) de l'utilisateur et mettre en oeuvre, pour chacune des pages (2) Internet consultées par le navigateur (30) de l'utilisateur, une étape de test du type de navigateur utilisé pour consulter la page Internet, afin de déterminer si ce navigateur nécessite ou non la mise en oeuvre des étapes suivantes définies dans le script:
- parcours (4) automatisé de la page (2) Internet reçue par l'ordinateur (3) de l'utilisateur et identification des éléments (21) dynamiques qu'elle contient, d'après les balises (24) d'une pluralité d'éléments dynamiques connus, stockés dans des moyens (31) de mémorisation de l'ordinateur (3) de l'utilisateur ;
- création (5) d'une référence (25) d'accès aux objets (22) dynamiques correspondants aux éléments (21) dynamiques identifiés, grâce à l'interprétation par le navigateur (30) de l'utilisateur d'un code source du langage de programmation des objets dynamiques, ce code source étant stocké dans les moyens (31) de mémorisation de l'ordinateur de l'utilisateur ;
- traitement (6), par le navigateur (30) de l'utilisateur, de la page (2) Internet et instanciation des objets (22) dynamiques définis ;
- affichage (7), par le navigateur (30) de l'utilisateur, de la page (2) Internet avec les objets (22) dynamiques qu'elle contient, grâce à des moyens (33) d'affichage et des moyens (32) de traitement de l'ordinateur (3) de l'utilisateur.

2. Procédé selon la revendication 1, **caractérisé en ce que** les étapes de parcours (4) automatisé de la page (2) Internet reçue et d'identification (5) des éléments (21) dynamiques qu'elle contient sont réalisées selon les étapes suivantes de :
- création et initialisation d'une variable (23) globale d'énumération des éléments (21) dynamiques contenus dans la page (2) Internet ;
- recherche de balises (24) de repérage et d'identifiants (E1, E2, E3, E4, E5) des éléments (21) dynamiques contenus dans la page (2) et comparaison des balises (24) trouvées avec la pluralité de balises (24) d'éléments (21) dynamiques connus qui est stockée dans les moyens (31) de mémorisation de l'ordinateur (3) de l'utilisateur ;
- ajout, dans la variable (23) globale d'énumération, des noms correspondant aux identifiants (E1, E2, E3, E4, E5) des éléments (21) dynamiques trouvés, grâce aux balises (24) de repérage des éléments (21) dynamiques dans la page (2) Internet.
- exécution d'une méthode de définition de références (25) d'accès aux objets (22) dynamiques correspondant aux éléments (21) dynamiques référencés dans la variable (23) globale d'énumération, cette méthode résultant en la création (5) des références (25) d'accès aux objets (22) dynamiques reconnus dans la page (2) Internet.

3. Procédé selon une des revendications 1 et 2, **caractérisé en ce que** l'étape de définition des références (25) d'accès aux objets (22) dynamiques, correspondants aux éléments (21) identifiés, est réalisée grâce à l'exécution d'une méthode de traitement de la variable (23) d'énumération des éléments dynamiques identifiés qui consiste en la création (5) de références (25) d'accès aux objets (22) dynamiques correspondants, reconnus comme des objets (22) définis dans le code source du langage de programmation des objets dynamiques et interprétables par le navigateur (30) de l'ordinateur (3) de l'utilisateur lors de l'affichage de la page (2) Internet.

4. Procédé selon une des revendications 1 à 3, **caractérisé en ce que** les références (25) d'accès définies grâce à l'interprétation du script sont ensuite utilisées pour une programmation objet, grâce à leur interprétation par les navigateurs (30) des utilisateurs, en utilisant le code source du langage de programmation des objets (22) dynamiques, l'exécution de méthodes de ces objets dynamiques permettant les différentes fonctions dynamiques de modification de l'affichage (7) des pages (2) Internet qui les contiennent, grâce à des moyens (33) d'affichage de l'ordinateur (3) de l'utilisateur, sans nécessiter de communication avec un ordinateur serveur de pages.

5. Procédé selon une des revendications 1 à 4, **caractérisé en ce que** le script (20) est inclus dans les pages (2) Internet contenant les éléments (21) dynamiques, grâce à l'ajout dans chacune de ces pages (2), par les moyens de traitement de l'ordinateur serveur de pages, d'une ressource de localisation universelle (URL) indiquant le chemin d'accès d'un fichier correspondant à ce script (20) dans des moyens (11) de mémorisation d'un ordinateur (1) serveur de script.

6. Procédé selon une des revendications 1 à 5, **caractérisé en ce que** l'ordinateur serveur de pages est également l'ordinateur (1) serveur de script et stocke, dans ses moyens (11) de mémorisation, d'une part, le fichier correspondant au script (20) correspondant au script permettant la reconnaissance et le référencement des objets (22) dynamiques dans les pages (2) Internet et, d'autre part, les fichiers correspondant aux pages (2) Internet dans lesquelles ce script (20) doit être inclus, l'étape d'inclusion du script (20) consistant en l'ajout, grâce aux moyens (13) de traitement de cet ordinateur (1) serveur de pages et de script, d'une URL indiquant le chemin d'accès d'un fichier correspondant à ce script (20) dans ses propres moyens (11) de mémorisation.

7. Procédé selon une des revendications 1 à 5, **caractérisé en ce que** l'ordinateur serveur de pages est un autre ordinateur que l'ordinateur (1) serveur de script et l'inclusion du script (20) dans les pages (2) Internet, lors d'une demande de consultation, par le navigateur (30) d'un utilisateur, d'une page (2) Internet contenant des éléments (21) dynamiques, est réalisée selon les étapes suivantes :
- envoi, par l'ordinateur serveur de pages, vers l'ordinateur serveur de script, via le réseau Internet (R), d'une requête d'accès au fichier correspondant au script (20) dans les moyens de mémorisation de l'ordinateur (1) serveur de script ;
- autorisation de l'accès au fichier correspondant au script (20), grâce à des moyens (12) d'autorisation d'accès de l'ordinateur (1) serveur de script, puis envoi de ce fichier, par l'ordinateur (1) serveur de script, vers l'ordinateur serveur de pages, via le réseau Internet (R);
- réception du fichier par l'ordinateur serveur de pages, inclusion du script (20) dans la page (2) Internet demandée pour consultation par le navigateur (30) de l'utilisateur et envoi de la page (2) Internet complétée du script (20) vers l'ordinateur (3) de l'utilisateur, via le réseau Internet (R).

8. Procédé selon une des revendications 1 à 5, **caractérisé en ce que** l'ordinateur serveur de pages est un autre ordinateur que l'ordinateur (1) serveur de script et l'inclusion du script (20) dans les pages (2) Internet, lors d'une demande de consultation, par le navigateur (30) d'un utilisateur, d'une page (2) Internet contenant des éléments (21) dynamiques, est réalisée selon les étapes suivantes :
- envoi, par l'ordinateur serveur de pages, vers l'ordinateur (1) serveur de script, via le réseau Internet (R), de la page (2) Internet dans laquelle le script (20) doit être inclus ;
- réception par l'ordinateur (1) serveur de script de la page (2) envoyée par l'ordinateur serveur de pages et inclusion du script (20) dans la page Internet, grâce à des moyens (13) de traitement de l'ordinateur (1) serveur de script, puis envoi de la page (2) Internet complétée du script (20) vers l'ordinateur serveur de pages, via le réseau Internet (R);
- envoi, par l'ordinateur serveur de pages, de la page (2) Internet complétée du script (20) vers l'ordinateur (3) de l'utilisateur, via le réseau Internet (R).

9. Système de reconnaissance et de référencement d'objets (22) dynamiques dans des pages (2) Internet reçues par un navigateur (30) exécuté par un ordinateur (3) d'utilisateur, même lorsque le navigateur de l'utilisateur ne gère pas l'accès automatique aux objets (22) dynamiques, selon une des revendications 1 à 8, ce système comportant au moins un ordinateur (1) serveur de script, au moins un ordinateur serveur de pages et au moins un ordinateur (3) d'un utilisateur, ces ordinateurs comportant tous des moyens de mémorisation, des moyens de traitement et des moyens de communication par le réseau Internet, **caractérisé en ce que** l'ordinateur serveur de pages et l'ordinateur (1) serveur de script comportent également des moyens (12) d'autorisation d'accès au contenu de leurs moyens (11) de mémorisation, les moyens (11) de mémorisation permettant, d'une part, à l'ordinateur serveur de pages de stocker des fichiers correspondant à des pages (2) Internet parmi lesquelles certaines contiennent des éléments (21) dynamiques et permettant, d'autre part, à l'ordinateur (1) serveur de script de stocker un script (20) à inclure dans des pages (2) Internet pour la reconnaissance et le référencement des objets (22) dynamiques qu'elles contiennent, les moyens (12) d'autorisation d'accès permettant, d'une part, à l'ordinateur serveur de pages de rendre les pages (2) Internet, stockées dans ses moyens (11) de mémorisation, disponibles sur le réseau (R) Internet pour consultation par des navigateurs (30) exécutés sur les moyens (32) de traitement d'ordinateurs d'utilisateurs et permettant, d'autre part, à l'ordinateur (1) serveur de script de rendre disponible le script (20), stocké dans ses moyens (11) de mémorisation, pour inclusion dans des pages (2) Internet contenant des éléments (21) dynamiques, avant l'envoi de ces pages (2) vers les navigateurs (30) des utilisateurs.

10. Système selon la revendication 9, **caractérisé en ce que** les moyens (31) de mémorisation de l'ordinateur (3) de l'utilisateur stockent le code source du langage de programmation des objets dynamiques et stockent temporairement les pages (2) Internet reçues, via le réseau Internet (R), depuis l'ordinateur serveur de pages et ses moyens (32) de traitement exécutent le navigateur (30) permettant de consulter les pages (2) Internet et d'interpréter le script (20) inclus dans certaines de ces pages (2), grâce à l'utilisation, par le navigateur (30), du code source du langage de programmation des objets dynamiques.

11. Système selon une des revendications 9 et 10, **caractérisé en ce que** l'ordinateur serveur de pages est également l'ordinateur (1) serveur de script et ses moyens (11) de mémorisation stockent, d'une part, le fichier correspondant au script (20) qui permet la reconnaissance et le référencement des objets (22) dynamiques dans les pages (2) Internet pour permettre l'accès à ces objets (22) par tous les types de navigateurs (30) et, d'autre part, les fichiers correspondant aux pages (2) Internet dans lesquelles ce script (20) doit être inclus, ses moyens (12) d'autorisation d'accès au contenu de ses moyens (11) de mémorisation permettant, d'une part, de rendre disponibles sur le réseau (R) Internet les pages (2) Internet correspondant aux fichiers stockés dans ses moyens (11) de mémorisation et, d'autre part, de rendre disponible le script (20) stocké dans ses moyens (11) de mémorisation pour l'inclure dans les pages (2) Internet, grâce à ses moyens (13) de traitement, en ajoutant une URL indiquant le chemin d'accès au fichier correspondant à ce script (20) dans ses moyens (11) de mémorisation.

12. Système selon une des revendications 9 et 10, **caractérisé en ce que** l'ordinateur serveur de pages est un autre ordinateur que l'ordinateur (1) serveur de script et l'inclusion du script (20) dans les pages (2) Internet contenant des éléments (21) dynamiques nécessite, d'une part, une communication entre ces ordinateurs, grâce à leurs moyens de communication par Internet et, d'autre part, l'ajout, dans certaines pages (2) Internet, de l'URL indiquant le chemin d'accès au fichier correspondant à ce script (20) dans les moyens (11) de mémorisation de l'ordinateur (1) serveur de script, grâce aux moyens de traitement de l'ordinateur serveur de pages ou aux moyens (13) de traitement de l'ordinateur (1) serveur de script.

## Patentansprüche

1. Verfahren zur Erkennung und Referenzierung von dynamischen Objekten (22) in Internetseiten (2), die dank eines Computers, eines so genannten Seitenservers, in dem Internet-Netzwerk (R) verfügbar gemacht wurden, zur Konsultation durch mindestens ein Internet-Browsing-Software-Tool, einen so genannten Browser (30), der in den Verarbeitungsmitteln (32) mindestens eines Computers (3) eines Benutzers ausgeführt wird, **dadurch gekennzeichnet, dass** es einerseits aus einem Skript (20), das in Speichermitteln (11) mindestens eines Computers (1) gespeichert ist, einem so genannten Skriptserver, und andererseits dynamischen Elementen (21) besteht, die in den Internetseiten (2) enthalten sind, um während des Ladens dieser Seiten (2) durch den Computer (3) des Benutzers durch alle Typen von Browsern (30) interpretiert zu werden, und für jede von Internetseiten (2), die durch den Browser (30) des Benutzers konsultiert wurden, einen Schritt des Testens des Browser-Typs, der zum Konsultieren der Internetseite verwendet wird, durchführt, um zu bestimmen, ob dieser Browser das Durchführen der folgenden, in dem Skript definierten Schritte erfordert oder nicht:
- automatisches Routen (4) der Internetseite (2), die von dem Computer (3) des Benutzers empfangen wurde, und Identifizieren von dynamischen Elementen (21), die sie enthält, gemäß den Tags (24) mehrere bekannte dynamische Elemente, die in Speichermitteln (31) des Computers (3) des Benutzers gespeichert sind;
- Erzeugen (5) einer Referenz (25) zum Zugriff auf die dynamischen Objekte (22), die den identifizierten dynamischen Elementen (21) entsprechen, dank der Interpretation eines Quellcodes der Programmiersprache von dynamischen Objekten durch den Browser (30) des Benutzers, wobei dieser Quellcode in den Speichermitteln (31) des Computers des Benutzers gespeichert ist;
- Verarbeiten (6) der Internetseite (2) durch den Browser (30) des Benutzers und Instanziieren von definierten dynamischen Objekten (22);
- Anzeigen (7) der Internetseite (2) mit den dynamischen Objekten (22), die sie enthält, durch den Browser (30) des Benutzers dank Anzeigemitteln (33) und Verarbeitungsmitteln (32) des Computers (3) des Benutzers.

2. Verfahren nach Anspruch 1, **dadurch gekennzeichnet, dass** die Schritte des automatisierten Routens (4) der empfangenen Internetseite (2) und des Identifizierens (5) von dynamischen Elementen (21), die sie enthält, gemäß den folgenden Schritten umgesetzt werden:
- Erzeugen und Initialisieren einer globalen Variable (23) zur Aufzählung von dynamischen Elementen (21), die in der Internetseite (2) enthalten sind;
- Suchen nach Markierungstags (24) und Kennungen (E1, E2, E3, E4, E5) von dynamischen Elementen (21), die in der Seite (2) enthalten sind, und Vergleichen von gefundenen Tags (24) mit den mehreren Tags (24) von bekannten dynamischen Elementen (21), die in den Speichermitteln (31) des Computers (3) des Benutzers gespeichert sind;
- Hinzufügen von Namen, die den Kennungen (E1, E2, E3, E4, E5) von gefundenen dynamischen Elementen (21) entsprechen, in die globale Aufzählungsvariable (23) dank den Markierungstags (24) von dynamischen Elementen (21) in der Internetseite (2);
- Ausführen einer Methode zur Definition von Referenzen (25) zum Zugriff auf die dynamischen Objekte (22), die den in der globalen Aufzählungsvariable (23) referenzierten dynamischen Elementen (21) entsprechen, wobei diese Methode zur Erzeugung (5) von Referenzen (25) zum Zugriff auf die in der Internetseite (2) erkannten dynamischen Objekte (22) führt.

3. Verfahren nach einem der Ansprüche 1 und 2, **dadurch gekennzeichnet, dass** der Schritt des Definierens von Referenzen (25) zum Zugriff auf die dynamischen Objekte (22), die den identifizierten Elementen (21) entsprechen, dank der Ausführung einer Methode zur Verarbeitung der Variable (23) zur Aufzählung von identifizierten dynamischen Elementen umgesetzt wird, die in der Erzeugung (5) von Referenzen (25) zum Zugriff auf die entsprechenden dynamischen Objekte (22) besteht, die als Objekte (22) erkannt werden, die in dem Quellcode der Programmiersprache von dynamischen Objekten definiert sind, und durch den Browser (30) des Computers (3) des Benutzers während der Anzeige der Internetseite (2) interpretierbar sind.

4. Verfahren nach einem der Ansprüche 1 bis 3, **dadurch gekennzeichnet, dass** die dank der Interpretation des Skripts definierten Zugriffsreferenzen (25) anschließend für ein Programmierobjekt dank ihrer Interpretation durch die Browser (30) von Benutzern verwendet werden, indem der Quellcode der Programmiersprache von dynamischen Objekten (22) verwendet wird, wobei die Ausführung von Methoden dieser dynamischen Objekte die unterschiedlichen dynamischen Funktionen zur Modifikation der Anzeige (7) von Internetseiten (2), die diese enthalten, dank Anzeigemitteln (33) des Computers (3) des Benutzers ermöglichen, ohne dass eine Kommunikation mit einem Seitenserver-Computer erforderlich ist.

5. Verfahren nach einem der Ansprüche 1 bis 4, **dadurch gekennzeichnet, dass** das Skript (20) in den Internetseiten (2), die die dynamischen Elemente (21) enthalten, dank des Hinzufügens einer Internetadresse (URL), die den Weg zum Zugriff auf eine Datei angibt, die diesem Skript (20) in Speichermitteln (11) eines Skriptserver-Computers (1) entspricht, in jede dieser Seiten (2) durch die Verarbeitungsmittel des Seitenserver-Computers enthalten ist.

6. Verfahren nach einem der Ansprüche 1 bis 5, **dadurch gekennzeichnet, dass** der Seitenserver-Computer auch der Skriptserver-Computer (1) ist und in seinen Speichermitteln (11) einerseits die Datei, die dem Skript (20) entspricht, das dem Skript entspricht, das die Erkennung und die Referenzierung von dynamischen Objekten (22) in den Internetseiten (2) ermöglicht, und andererseits die Dateien, die den Internetseiten (2) entsprechen, in die dieses Skript (20) aufgenommen werden soll, speichert, wobei der Schritt des Aufnehmens des Skripts (20) in dem Hinzufügen einer URL, die den Weg zum Zugriff auf eine Datei angibt, die diesem Skript (20) in seinen eigenen Speichermitteln (11) entspricht, dank den Verarbeitungsmitteln (13) dieses Seiten- und Skriptserver-Computers (1) besteht.

7. Verfahren nach einem der Ansprüche 1 bis 5, **dadurch gekennzeichnet, dass** der Seitenserver-Computer ein anderer Computer als der Skriptserver-Computer (1) ist und die Aufnahme des Skripts (20) in die Internetseiten (2) während einer Konsultationsanfrage an eine Internetseite (2), die dynamische Elemente (21) enthält, durch den Browser (30) eines Benutzers gemäß den folgenden Schritten umgesetzt wird:
- Senden einer Anforderung zum Zugriff auf die Datei, die dem Skript (20) in den Speichermitteln des Skriptserver-Computers (1) entspricht, durch den Seitenserver-Computer mittels des Internet-Netzwerks (R) an den Skriptserver-Computer;
- Autorisieren des Zugriffs auf die Datei, die dem Skript (20) entspricht, dank Zugriffsautorisationsmitteln (12) des Skriptserver-Computers (1) und dann Senden dieser Datei durch den Skriptserver-Computer (1) mittels des Internet-Netzwerks (R) an den Seitenserver-Computer;
- Empfangen der Datei durch den Seitenserver-Computer, Aufnehmen des Skripts (20) in die Internetseite (2), die zur Konsultation durch den Browser (30) des Benutzers angefragt wurde, und Senden der mit dem Skript (20) ergänzten Internetseite (2) mittels des Internet-Netzwerks (R) an den Computer (3) des Benutzers.

8. Verfahren nach einem der Ansprüche 1 bis 5, **dadurch gekennzeichnet, dass** der Seitenserver-Computer ein anderer Computer als der Skriptserver-Computer (1) ist und die Aufnahme des Skripts (20) in die Internetseiten (2) während einer Konsultationsanfrage an eine Internetseite (2), die dynamische Elemente (21) enthält, durch den Browser (30) eines Benutzers gemäß den folgenden Schritten umgesetzt wird:
- Senden der Internetseite (2), in die das Skript (20) aufgenommen werden soll, durch den Seitenserver-Computer mittels des Internet-Netzwerks (R) an den Skriptserver-Computer (1);
- Empfangen der durch den Seitenserver-Computer gesendeten Seite (2) durch den Skriptserver-Computer (1) und Aufnehmen des Skripts (20) in die Internetseite dank Verarbeitungsmitteln (13) des Skriptserver-Computers (1) und dann Senden der mit dem Skript (20) ergänzten Internetseite (2) mittels des Internet-Netzwerks (R) an den Seitenserver-Computer;
- Senden der mit dem Skript (20) ergänzten Internetseite (2) durch den Seitenserver-Computer mittels des Internet-Netzwerks (R) an den Computer (3) des Benutzers.

9. System zur Erkennung und Referenzierung von dynamischen Objekten (22) in Internetseiten (2), die durch einen Browser (30) empfangen werden, der von einem Computer (3) eines Benutzers ausgeführt wird, selbst wenn der Browser des Benutzers nicht den automatischen Zugriff auf die dynamischen Objekte (22) verwaltet, nach einem der Ansprüche 1 bis 8, wobei dieses System mindestens einen Skriptserver-Computer (1), mindestens einen Seitenserver-Computer und mindestens einen Computer (3) eines Benutzers umfasst, wobei diese Computer alle Speichermittel, Verarbeitungsmittel und Mittel zur Kommunikation durch das Internet-Netzwerk umfassen, **dadurch gekennzeichnet, dass** der Seitenserver-Computer und der Skriptserver-Computer (1) außerdem Mittel (12) zur Autorisation von Zugriff auf den Inhalt ihrer Speichermittel (11) umfassen, wobei die Speichermittel (11) einerseits zulassen, dass der Seitenserver-Computer Dateien speichert, die Internetseiten (2) entsprechen, von denen bestimmte dynamische Elemente (21) enthalten, und andererseits zulassen, dass der Skriptserver-Computer (1) ein Skript (20), das in Internetseiten (2) aufgenommen werden soll, zur Erkennung und Referenzierung von dynamischen Objekten (22), die sie enthalten, speichert, wobei die Zugriffsautorisationsmittel (12) einerseits zulassen, dass der Seitenserver-Computer die Internetseiten (2), die in seinen Speichermitteln (11) gespeichert sind, in dem Internet-Netzwerk (R) zur Konsultation durch Browser (30), die in den Verarbeitungsmitteln (32) von Computern von Benutzern ausgeführt werden, verfügbar macht, und andererseits zulassen, dass der Skriptserver-Computer (1) das Skript (20), das in seinen Speichermitteln (11) gespeichert ist, zur Aufnahme in Internetseiten (2), die dynamische Elemente (21) enthalten, verfügbar macht, bevor diese Seiten (2) an die Browser (30) von Benutzern gesendet werden.

10. System nach Anspruch 9, **dadurch gekennzeichnet, dass** die Speichermittel (31) des Computers (3) des Benutzers den Quellcode der Programmiersprache von dynamischen Objekten speichern und die von dem Seitenserver-Computer mittels des Internet-Netzwerks (R) empfangenen Internetseiten (2) vorübergehend speichern und seine Verarbeitungsmittel (32), die den Browser (30) ausführen, zulassen, dass die Internetseiten (2) konsultiert und das Skript (20), das in bestimmten dieser Seiten (2) aufgenommen ist, dank der Verwendung des Quellcodes der Programmiersprache von dynamischen Objekten durch den Browser (30) interpretieren.

11. System nach einem der Ansprüche 9 und 10, **dadurch gekennzeichnet, dass** der Seitenserver-Computer auch der Skriptserver-Computer (1) ist und seine Speichermittel (11) einerseits die Datei speichern, die dem Skript (20) entspricht, das die Erkennung und die Referenzierung von dynamischen Objekten (22) in den Internetseiten (2) durch Ermöglichen von Zugriff auf diese Objekte (22) durch alle Typen von Browsern (30) ermöglicht, und andererseits die Dateien speichern, die den Internetseiten (2) entsprechen, in denen dieses Skript (20) aufgenommen werden soll, wobei seine Mittel (12) zum Zugriff auf den Inhalt seiner Speichermittel (11) einerseits zulassen, dass die Internetseiten (2), die den Dateien entsprechen, die in seinen Speichermitteln (11) gespeichert sind, in dem Internet-Netzwerk (R) verfügbar gemacht werden, und andererseits zulassen, dass das Skript (20), das in seinen Speichermitteln (11) gespeichert ist, durch Aufnehmen dieses in die Internetseiten (2) dank seinen Verarbeitungsmitteln (13) verfügbar gemacht wird, indem eine URL hinzugefügt wird, die den Weg zum Zugriff auf die Datei angibt, die diesem Skript (20) in seinen Speichermitteln (11) entspricht.

12. System nach einem der Ansprüche 9 und 10, **dadurch gekennzeichnet, dass** der Seitenserver-Computer ein anderer Computer als der Skriptserver-Computer (1) ist und die Aufnahme des Skripts (20) in die Internetseiten (2), die dynamische Elemente (21) enthalten, einerseits eine Kommunikation zwischen diesen Computern dank ihrer Kommunikationsmittel durch das Internet und andererseits das Hinzufügen der URL, die den Weg zum Zugriff auf die Datei angibt, die diesem Skript (20) in den Speichermitteln (11) des Skriptserver-Computers (1) entspricht, in bestimmten Internetseiten (2) dank den Verarbeitungsmitteln des Seitenserver-Computers oder den Verarbeitungsmitteln (13) des Skriptserver-Computers (1) erfordert.

## Claims

1. Method for recognition and referencing of dynamic objects (22) in Internet pages (2) made available on the Internet network (R) thanks to at least one computer, called page server, for viewing by at least one Internet browsing software tool, called browser (30), executed on the processing means (32) of at least one user's computer (3), **characterized in that** it consists of a script (20), firstly, stored in memory means (11) of at least one computer (1), called script server, and secondly, included in the Internet pages (2) containing dynamic elements (21), to be interpreted by all types of browsers (30) when these pages (2) are loaded by the user's computer (3), and to implement a step to test the type of browser used to view the Internet page, for each of the Internet pages (2) viewed by the user's browser (30), so as to determine whether or not this browser requires the implementation of the following steps defined in the script:
- automated routing (4) of the Internet page (2) received by the user's computer (3) and identification of the dynamic elements (21) contained in it, according to the tags (24) of a plurality of known dynamic elements stored in memory means (31) of the user's computer (3);
- creation (5) of an access reference (25) to dynamic objects (22) corresponding to identified dynamic elements (21), thanks to the user's browser (30) interpreting a source code of the dynamic objects programming language, this source code being stored in the memory means (31) of the computer of the user;
- processing (6) of the Internet page (2) by the user's browser (30) and instantiation of the defined dynamic objects (22);
- display (7) of the Internet page (2) by the user's browser (30) with the dynamic objects (22) contained in it by means of display means (33) and processing means (32) of the user's computer (3).

2. Method according to claim 1, **characterized in that** the steps for the automatic routing (4) of the received Internet page (2) and for the identification (5) of the dynamic elements (21) contained in it are executed according to the following steps:
- creation and initialization of a global variable (23) for enumeration of dynamic elements (21) contained in the Internet page (2);
- search for marking tags (24) and identifiers (EI, E2, E3, E4 and E5) of dynamic elements (21) contained in the page (2) and comparison of the tags (24) found with the plurality of tags (24) of known dynamic elements (21) stored in the memory means (31) of the user's computer (3),
- addition of names corresponding to identifiers (EI, E2, E3, E4 and E5) of the dynamic elements (21) found, using the marking tags (24) of dynamic elements (21) in the Internet page (2), into the global enumeration variable (23),
- execution of a method for the definition of access references (25) to dynamic objects (22) corresponding to dynamic elements (21) referenced in the global enumeration variable (23), this method resulting in the creation (5) of access references (25) to dynamic objects (22) recognized in the Internet page (2).

3. Method according to one of claims 1 and 2, **characterized in that** the step for defining access references (25) to the dynamic objects (22) corresponding to the identified elements (21) is done by execution of a method for processing the enumeration variable (23) of the identified dynamic elements, that consists of the creation (5) of access references (25) to the corresponding dynamic objects (22), recognized as objects (22) defined in the source code of the dynamic objects programming language and interpretable by the browser (30) of the user's computer (3) when the Internet page (2) is displayed.

4. Method according to one of claims 1 to 3, **characterized in that** the access references (25) defined by the interpretation of the script are then used for object programming due to their interpretation by the browsers (30) of the users, by means of the source code of the dynamic objects (22) programming language, execution of methods of these dynamic objects enabling the different dynamic functions for modifying the display (7) of Internet pages (2) that contain them, thanks to display means (33) of the user's computer (3) without necessitating any communication with a page server computer.

5. Method according to one of claims 1 to 4, **characterized in that** the script (20) is included in the Internet pages (2) containing the dynamic elements (21), due to the processing means of the page server computer adding a universal resource locator (URL) into each of these pages (2), indicating the access path of a file corresponding to this script (20) in the memory means (11) of a script server computer (1).

6. Method according to one of claims 1 to 5, **characterized in that** the page server computer is also the script server computer (1) and its memory means (11) store firstly the file corresponding to the script (20) corresponding to the script enabling the recognition and referencing of dynamic objects (22) in the Internet pages (2), and secondly files corresponding to the Internet pages (2) in which this script (20) must be included, the script (20) inclusion step consisting of using the processing means (13) of this page and script server computer (1) to add a URL indicating the access path of a file corresponding to this script (20) in its own memory means (11).

7. Method according to one of claims 1 to 5, **characterized in that** the page server computer is a computer other than the script server computer (1) and the script (20) is included in the Internet pages (2) when a user's browser (30) makes a request to view an Internet page (2) containing dynamic elements (21), according to the following steps:
- the page server computer sends an access request to the file corresponding to the script (20) in the memory means of the script server computer (1), to the script server computer through the Internet network (R),
- authorization of the access to the file corresponding to the script (20) by means of access authorization means (12) of the script server computer (1), this file being then sent by the script server computer (1) to the page server computer through the Internet network (R),
- reception of the file by the page server computer, inclusion of the script (20) in the Internet page (2) requested for viewing by the user's browser (30), and the Internet page (2) is then sent through the Internet network (R) together with the script (20) to the user's computer (3).

8. Method according to one of claims 1 to 5, **characterized in that** the page server computer is a computer other than the script server computer (1) and the script (20) is included in the Internet pages (2) when a user's browser (30) makes a viewing request to view an Internet page (2) containing dynamic elements (21), according to the following steps:
- the page server computer sends the Internet page (2) in which the script (20) must be included through the Internet network (R) to the script server computer (1);
- the script server computer (1) receives the page (2) sent by the page server computer and the script (20) is included in the Internet page by means of processing means (13) of the script server computer (1), and the Internet page (2) is then sent together with the script (20) to the page server computer through the Internet network (R),
- the page server computer sends the Internet page (2) together with the script (20) to the user's computer (3), through the Internet network (R).

9. System for recognition and referencing of dynamic objects (22) in Internet pages (2) received by a browser (30) executed by a user's computer (3), even when the user's browser does not manage automatic access to dynamic objects (22), according to any one of claims 1 to 8, this system comprising at least one script server computer (1), at least one page server computer and at least one user's computer (3), these computers all comprising memory means, processing means and communication means via the Internet network, **characterized in that** the page server computer and the script server computer (1) also comprise access authorization means (12) to the contents of their memory means (11), the memory means (11) enabling, firstly, the page server computer to store files corresponding to Internet pages (2) among which some contain dynamic elements (21), and secondly, enabling the script server computer (1) to store a script (20) to be included in Internet pages (2) for the recognition and referencing of the dynamic objects (22) contained in them, the access authorization means (12) enabling, firstly, the page server computer to make Internet pages (2) stored in its memory means (11) available on the Internet network (R) for viewing by browsers (30) executed on the processing means (32) of computers of users, and secondly, enabling the script server computer (1) to make the script (20) stored in its memory means (11) available for inclusion in Internet pages (2) containing dynamic elements (21), before sending these pages (2) to the users' browsers (30).

10. System according to claim 9, **characterized in that** the memory means (31) of the user's computer (3) store the source code of the dynamic objects programming language and temporarily store the Internet pages (2) received through the Internet network (R) from the page server computer, and its processing means (32) execute the browser (30) that enables the Internet pages (2) to be viewed and the script (20) included in some of these pages (2) to be interpreted, through the use by the browser (30) of the source code of the dynamic objects programming language.

11. System according to one of claims 9 and 10, **characterized in that** the page server computer is also the script server computer (1) and its memory means (11) store, firstly, the file corresponding to the script (20) that enables the recognition and referencing of the dynamic objects (22) in the Internet pages (2) to enable the access to these objects (22) by all the types of browsers (30), and, secondly, the files corresponding to the Internet pages (2) in which this script (20) must be included, wherein its means (12) for authorizing access to the contents of its memory means (11) enables, firstly, the Internet pages (2) corresponding to files stored in its memory means (11) to be made available on the Internet network (R), and, secondly, the script (20) stored in its memory means (11) to be made available in order to include it in the Internet pages (2), by means of its processing means (13), by adding a URL indicating the access path to the file corresponding to this script (20) in its memory means (11).

12. System according to one of claims 9 and 10, **characterized in that** the page server computer is a computer different than the script server computer (1) and the inclusion of the script (20) in the Internet pages (2) that contain dynamic elements (21) requires, firstly, a communication between these computers, thanks to their Internet communication means and, secondly, adding, in some Internet pages (2), the URL that indicates the access path to the file corresponding to this script (20) in the memory means (11) of the script server computer (1), thanks to the processing means of the page server computer or the processing means (13) of the script server computer (1).
